# EUROPÄISCHE PATENTSCHRIFT

(11) **EP 2 215 381 B1**
(45) Veröffentlichungstag und Bekanntmachung des Hinweises auf die Patenterteilung: **02.11.2011**
(21) Anmeldenummer: 08854316.0
(22) Anmeldetag: 24.11.2008
(51) Int. Cl.: F16H 47/04, F16H 57/02

(54) **BAUKASTENSYSTEM FÜR EIN HYDROSTATISCH MECHANISCHES LASTSCHALTGETRIEBE**
MODULAR SYSTEM FOR A HYDROSTATICALLY MECHANICAL POWER TRANSMISSION
SYSTÈME MODULAIRE POUR BOÎTE DE VITESSES HYDROSTATIQUE-MÉCANIQUE COUPLABLE SOUS CHARGE

(30) Priorität: 29.11.2007 DE 102007057534
(43) Veröffentlichungstag der Anmeldung: 11.08.2010
(73) Patentinhaber: Hytrac GmbH, 45139 Essen (DE)
(72) Erfinder: TOLKSDORF, Detlef, 45141 Essen (DE); TRAUTMANN, Nils, 45739 Oer-Erkenschwick (DE)
(74) Vertreter: Döpp, Ludger
(86) Internationale Anmeldenummer: PCT/DE2008/001934
(87) Internationale Veröffentlichungsnummer: WO 2009/067998

(56) Entgegenhaltungen:
- EP-A- 0 465 752
- WO-A-02/27213
- DE-B- 1 188 406

## Beschreibung

Die Erfindung betrifft ein Baukastensystem für ein hydrostatisch mechanisches Lastschaltgetriebe, insbesondere für Mobilfahrzeuge mit unterschiedlichen Dienstgewichten gemäß gattungsbildendem Teil des ersten Patentanspruches.

Durch die DE 44 04 829 C2 ist ein hydrostatisch mechanisches Lastschaltgetriebe, insbesondere für mobile Bau- und Arbeitsmaschinen, bekannt geworden, das mindestens zwei über mindestens eine Pumpe antreibbare eingangswellenseitig mit mindestens einer Zahnradpaarung in Wirkverbindung stehende Hydromotore aufweist, die für einen ersten Fahrbereich der Bau- und Arbeitsmaschine zur Addition der Drehmomente beider Hydromotore über eine Kupplung miteinander verbunden sind und mindestens ein mindestens eine Abtriebswelle des Lastschaltgetriebes beinhaltendes Planetengetriebe aufweist, dessen Hohlrad über mindestens eine Bremse festsetzbar ist, wobei für einen sich an den ersten Fahrbereich anschließenden weiteren Fahrbereich zumindest einer der Hydromotore über die Kupplung von der Antriebswelle des anderen Hydromotors entkuppelbar ist. Der von der Antriebswelle entkuppelbare Hydromotor ist über eine weitere Kupplung im Bereich seiner Antriebswelle zur mechanischen Addition der Drehzahlen beider Hydromotore entsprechend dem Überlagerungsprinzip kraftschlüssig auf das Hohlrad des Planetengetriebes kuppelbar.

Die DE 10 2005 041 750 A1 betrifft ein Baukastensystem für einen Stirnradantrieb unterschiedlicher Leistung für Flurförderfahrzeuge, beinhaltend ein auf gegenüberliegenden Seiten offenes Einheitsgehäuse mit einer hohlzylindrischen Aufnahme mit vorgegebenem Innendurchmesser für ein Motorpaket eines Elektromotors, einen Satz Motorpakete unterschiedlicher Leistung und Länge, von denen jedes einen Außendurchmesser gleich dem Innendurchmesser der Aufnahme aufweist, einen ersten Deckel auf einer Seite des Gehäuses, einen zweiten Deckel auf der gegenüberliegenden Seite des Gehäuses, Lager im Gehäuse und in den Deckeln für die Motorwelle, mindestens eine Getriebewelle und eine Abtriebswelle für ein Laufrad, ein Stirnradgetriebe im Gehäuse mit auf den Wellen sitzenden Stirnrädern, wobei mindestens zwei Stirnräder jeweils in einem Satz Stirnräder unterschiedlicher Größe vorliegen und einen Satz elektromagnetischer Bremseinheiten unterschiedlicher Größe bzw. unterschiedlicher Bremsleistung, wobei der zweite Deckel unterschiedliche Anschraubmittel für jede Bremseinheit eines Satzes aufweist.

Der DE 10 2005 028 532 B4 ist ein modulares (Lastschalt-)Getriebe mit zwei Eingangswellen, einer Ausgangswelle, mehreren Vorgelegewellen und einem ersten Schaltelement zur direkten drehfesten Verbindung zweier Losräder, unabhängig von ihrer zugehörigen Vorgelegewelle, zu entnehmen, wobei ein zu einem höheren Vorwärtsgang zugehöriges Losrad auf einer ersten Vorgelegewelle direkt auf eine zweite als konzentrische Hohlwelle ausgeführte Vorgelegewelle mit einem weiteren Zahnrad verbunden ist und über ein zweites Schaltelement drehfest mit der ersten Vorgelegewelle verbunden werden kann, das weitere Zahnrad mit einem Losrad der Ausgangswelle kämmt, dieses Losrad über ein drittes Schaltelement mit der Ausgangswelle drehfest verbunden werden kann und das dritte Schaltelement zweiseitig ausgeführt ist und damit eine drehfeste Verbindung zwischen der ersten Eingangswelle und der Ausgangswelle hergestellt werden kann.

Die DE 118406 B beschreibt ein stufenlos einstellbares hydrostatisches Axialkolbenübersetzungsgetriebe mit je einer Antriebs- und Abtriebswelle und mindestens drei einzelnen hydrostatischen Axialkolbeneinheiten, insbesondere für Kraftfahrzeuge mit schnell laufenden Motoren. Das Axialkolbenübersetzungsgetriebe ist gekennzeichnet durch die Kombination folgender für sich allein bekannter Merkmale, nämlich
1. dass ein gemeinsames Flüssigkeitsverteilerstück für wenigstens drei hydrostatische Einheiten vorgesehen ist;
2. dass mindestens zwei hydrostatische Einheiten angeordnet sind, die auf eine gemeinsame Welle arbeiten und
3. dass die Zylindertrommeln der hydrostatischen Einheiten zu den jeweiligen Triebwellen dieser Einheiten konzentrisch angeordnet sind und, mit ihnen drehfest verbunden, umlaufen.

Durch die WO 02/27213 A1 ist eine Getriebesynthese bekannt geworden, mit einem stufenlos verstellbaren Getriebeteil und einem konstanten Getriebeteil. Die Getriebeteile sind modular ausgebildet, wobei das stufenlose Getriebemodul eine für sich abgeschlossene funktionsfähige Getriebeeinheit mit einem Verstellgetriebegehäuse bildet ,welches zu wenigstens einer Seite offen ist und hier einen Flansch enthält und wobei sich innerhalb des Flanschbereichs wenigstens eine stufenlos verstellbare Ausgangswelle des stufenlosen Getriebemoduls erstreckt und wobei der Flansch der wahlweisen Befestigung konstanter Getriebemodule unterschiedlicher Leistungsklassen und/oder unterschiedlicher Schaltstufen dient.

Der EP 0 465 752 A1 ist ein Gangwechselgetriebe zu entnehmen, beinhaltend eine Eingangswelle, eine Ausgangswelle, miteinander in Wirkverbindung stehende Zahnräder, eine hydrostatische Übertragungseinheit und ein epizykloidisches Umlaufgetriebe. Der hydrostatische Antrieb beinhaltet eine Hydraulikpumpe und einen Hydraulikmotor, wobei zumindest eine dieser Komponenten mit mindestens einer Welle des epizykloidischen Umlaufgetriebes in Wirkverbindung steht.

Ziel des Erfindungsgegenstandes ist es, ein Baukastensystem zur Herstellung eines hydrostatisch mechanischen Lastschaltgetriebes, einsetzbar für Mobilfahrzeuge mit unterschiedlichen Dienstgewichten und/oder Fahrzuständen, bereitzustellen, das unter Einbeziehung einer Vielzahl gleicher bzw. gleichartiger Bauteile für einen großen Dienstgewichtbereich des jeweiligen Mobilfahrzeuges verwendet werden kann. Durch diese Maßnahme soll die Lagerhaltung gering gehalten werden.

Das Ziel wird dadurch erreicht, dass mindestens eine weitere Kammer, wahlweise entweder mit im Wesentlichen den gleichen Bauteilen, die in der ersten Kammer vorgesehen sind bestückt ist oder die Kammer leer bleibt oder die Kammer lediglich mit einer mindestens ein Abtriebselement aufweisenden Antriebswelle bestückt ist, wobei außerhalb des Grundkörpers in Abhängigkeit des jeweiligen Dienstgewichtes des Mobilfahrzeuges Hydromotore gleicher oder unterschiedlicher Nenngröße im Bereich der jeweiligen Antriebswelle ankuppelbar sind.

Der Erfindungsgegenstand ist insbesondere anwendbar bei Radladern mit unterschiedlichen Dienstgewichten, beispielsweise zwischen 15 und 45 Tonnen. Andersartige Mobilfahrzeuge, die von Radladern abweichende Fahrzustände aufweisen, wie beispielsweise Grader, Autokrane, Schneefräsen, Kommunalfahrzeuge, Agrarfahrzeuge, z. B. Mähdräscher oder Häcksler oder dergleichen, können ebenfalls mit dem, nach Art eines Baukastensystems erzeugbaren hydrostatisch mechanischen Lastschaltgetriebe ausgerüstet werden.

Der Erfindungsgegenstand bezieht sich insbesondere auf ein hydrostatisch mechanisches Lastschaltgetriebe, das in der DE 44 04 829 C2 beschrieben ist. Wie bereits angesprochen, kann das Baukastensystem für Mobilfahrzeuge mit unterschiedlichen Dienstgewichten und/oder Fahrzuständen eingesetzt werden, wobei die Lagerhaltung der einzelnen Komponenten bei gleichzeitiger Herstellkostenersparnis aufgrund höherer Fertigungsstückzahlen gering gehalten werden kann.

Soll das Lastschaltgetriebe für ein Mobilfahrzeug, beispielsweise einen Radlader mit einem Dienstgewicht zwischen 15 und 20 t, zum Einsatz gelangen, wird eine erste Kammer mit sämtlichen notwendigen Bauteilen des Lastschaltgetriebes ausgerüstet, wobei eine weitere Kammer, lediglich eine Antriebswelle und damit in Wirkverbindung stehende Abtriebselemente, wie z.B. mindestens ein Zahnrad, beinhaltet. Die Antriebswellen beider Kammern stehen mit jeweils einem Hydromotor vorgebbarer Nenngröße, insbesondere der Nenngröße 80 cm³, in Wirkverbindung, die beispielsweise in geschlossenem hydraulischem Kreislauf von mindestens einer Hydropumpe angetrieben werden.

Bei einem Mobilfahrzeug mit einem Dienstgewicht zwischen 20 und 30 t können zwei Kammern mit sämtlichen Bauteilen des Lastschaltgetriebes ausgerüstet werden, wobei auch hier die in den Kammern angeordneten Bauteile gleich ausgebildet sind. Zum Einsatz kommen mindestens drei Hydromotore gleicher oder unterschiedlicher Nenngröße, die mit den Antriebswellen der Kammern in Wirkverbindung stehen.

Bei einem Mobilfahrzeug mit einem Dienstgewicht zwischen 30 und 40 t sind zwei Kammern mit sämtlichen Bauteilen des Lastschaltgetriebes ausgerüstet, wobei die Bauteile vorteilhafterweise baugleich ausgebildet sind. Die Antriebswellen beider Kammern wirken mit jeweils einem Hydromotor vorgebbarer Nenngröße, insbesondere der Nenngröße 110 cm³ zusammen.

Über definierte Bereiche des Dienstgewichtes der Mobilfahrzeuge können gleiche Grundkörper-Baugrößen Anwendung finden.

Der Grundkörper ist vorzugsweise als Gusskörper ausgebildet, wobei die einzelnen Kammern durch Stege oder Wandabschnitte voneinander getrennt sind. Dies bewirkt einen guten Ölfluß zwischen den einzelnen Kammern, so dass eine ausreichende Schmierung und Kühlung der Bauteile des Lastschaltgetriebes gegeben sind.

Je nach Dienstgewicht und/oder zu beherrschenden Fahrzustandes des Mobilfahrzeuges, respektive des vorhandenen Bauraums, werden die Hydromotore in ein- oder beidseitiger Anordnung im Bereich der jeweiligen Antriebswelle am Grundkörper vorgesehen.

In Erweiterung des Erfindungsgegenstandes besteht auch die Möglichkeit, dass der Grundkörper mit einem Pumpenverteilergetriebe in Wirkverbindung gebracht wird, das zumindest mechanische Bauelemente beinhaltet.

Das Pumpenverteilergetriebe kann entweder lösbar mit dem Grundkörper des Lastschaltgetriebes verbunden werden oder aber integraler Teil des Grundkörpers sein, so dass zumindest die mechanischen Elemente des Pumpenverteilergetriebes innerhalb des Grundkörpers vorgesehen sind. Hydraulischen Komponenten, nämlich Hydropumpen, sind dann außerhalb des gemeinsamen Grundkörpers, respektive des Pumpenverteilergetriebes, vorgesehen.

Zur Erzeugung eines Leistuhgsverzweigungsgetriebes können innerhalb des Pumpenverteilergetriebes, respektive des gemeinsamen Grundkörpers, weitere Zahnräder und Kupplungen vorgesehen werden, die, eine mechanische Überbrückung des hydrostatischen Kreislauf bildend, mit den Abtriebselementen des Lastschaltgetriebes in Wirkverbindung gebracht werden.

Der Erfindungsgegenstand ist anhand eines Ausführungsbeispiels in der Zeichnung dargestellt und wird wie folgt beschrieben. Es zeigen:
- Figuren 1 bis 5: Unterschiedliche Ausgestaltungen des erfindungsgemäßen Baukastensystems als Prinzipskizzen;
- Figur 5 a: Alternative Ausgestaltungsform eines Lastschaltgetriebes;
- Figur 6: Prinzipskizze eines Leistungsverzweigungsgetriebes;
- Figur 7: Andersartige Darstellung eines Lastschaltgetriebes in verschiedenen Ansichten.

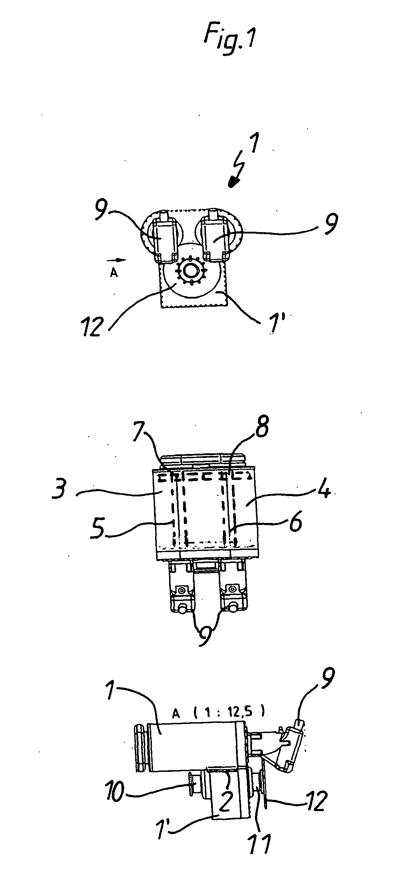

Die Figuren 1 bis 5 zeigen als Prinzipskizzen ein Baukastensystem zur Herstellung eines hydrostatisch mechanischen Lastschaltgetriebes, insbesondere einsetzbar für Mobilfahrzeuge mit unterschiedlichen Dienstgewichten.

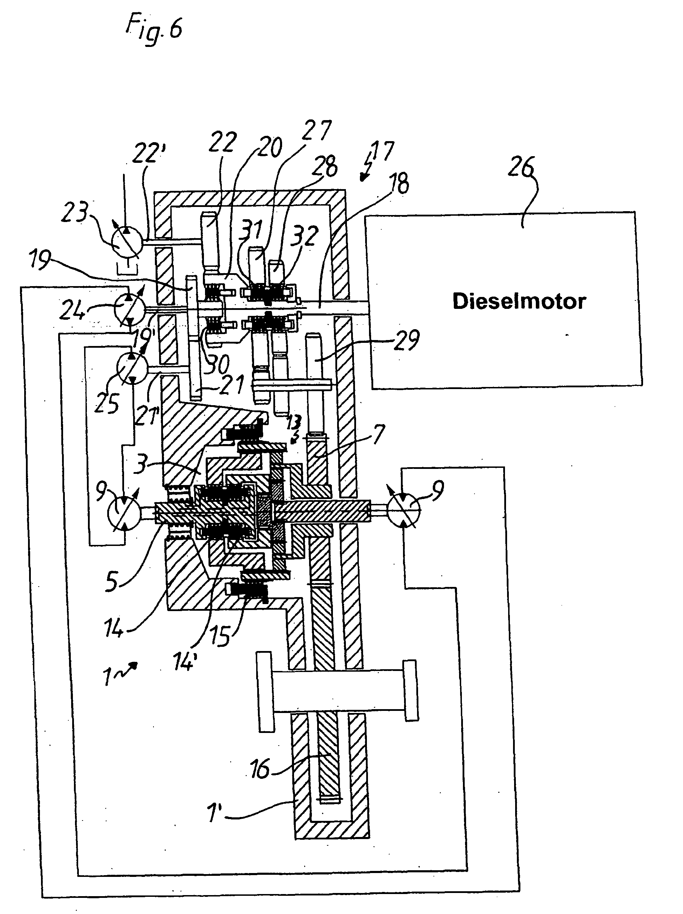

Das Baukastensystem, beispielsweise für ein in der DE 44 04 829 C2 dargestelltes hydrostatisch mechanisches Lastschaltgetriebe, beinhaltet einen aus Grauguss bestehenden Grundkörper 1, der entweder einen integrierten Abtriebsbereich oder aber wie in den Figuren 1 bis 5 dargestellt, einen separaten Abtrieb 1' aufweist, der mit dem Grundkörper 1 über Schrauben 2 verbunden ist. Letztere Maßnahme hat den Vorteil, dass über einen bestimmten Spreizungsbereich des Dienstgewichtes eines Mobilfahrzeuges der gleiche Grundkörper 1 verwendet werden kann und bedarfsweise mit größeren Bauteilen bestückte Abtriebe 1' an den Grundkörper 1angeflanscht werden können. Ein jeder Grundkörper 1 beinhaltet mindestens zwei Kammern 3,4. Lediglich angedeutet sind in Figur 1 Antriebswellen 5,6, die Abtriebselemente 7,8 in Form von Zahnrädern, z.B. Stirnrädern, aufweisen. In Figur 6 ist das Lastschaltgetriebe in konkreterer Bauform dargestellt.

Ein Mobilfahrzeug, beispielsweise ein Radlader mit einem Dienstgewicht von 15 t, kann mit einem hydrostatisch mechanischen Lastschaltgetriebe ausgerüstet werden, wie es beispielsweise in Figur 1 prinzipiell dargestellt ist.

Bei einem Radlader sind folgende Betriebszustände gegeben:
- geringe Anfahrgeschwindigkeit bei hohem Drehmoment
- höhere Fahrzeuggeschwindigkeit bei geringerem Drehmoment.

Am Grundkörper 1 sind einseitig, d.h. an einer Stirnseite des Grundkörpers 1, Hydromotore 9 angeflanscht, die mit der jeweiligen Antriebswelle 5,6 in Wirkverbindung stehen. Der besseren Übersicht halber sind die Bauteile des Lastschaltgetriebes, wie beispielsweise Kupplungen, Bremsen, Bauteile eines Planetengetriebes oder dergleichen, nicht dargestellt. Verwiesen wird hierbei auf die DE 44 04 829 C2, in der die wesentlichen Bauteile des Lastschaltgetriebes beschrieben sind. Darüber hinaus zeigt auch die Figur 6 eine nähere Darstellung der zum Einsatz gelangenden Bauteile.

Für den 15 t Radlader kann die Kammer 3 mit den Bauteilen des Lastschaltgetriebes bestückt werden, während die Kammer 4 lediglich eine Antriebswelle 6 und ein Zahnrad 8 aufweist. Als Hydromotore 9 können für diesen Typ Radlader Nenngrößen von jeweils 80 cm³ verwendet werden, Im Bereich des Abtriebes 1' sind Ausgangswellen 10,11 vorgesehen, die ebenfalls mit einem hier nicht weiter dargestellten Zahnrad in Wirkverbindung stehen, das entweder mit dem Zahnrad 7 oder 8 kämmt. Ebenfalls erkennbar ist eine Bremsscheibe 12 im Bereich der Ausgangswelle 11.

Für ein Mobilfahrzeug, beispielsweise eine Pistenraupe mit 20 t Dienstgewicht, kommt der gleiche Grundkörper 1 zum Einsatz, wie er in Figur 1 beschrieben wurde. Hier sind beide Kammern 3,4 mit baugleichen Bauteilen des Lastschaltgetriebes ausgerüstet. Einseitig sind ebenfalls Hydromotore 9', beispielsweise der Nenngröße 110 cm³, angeflanscht.

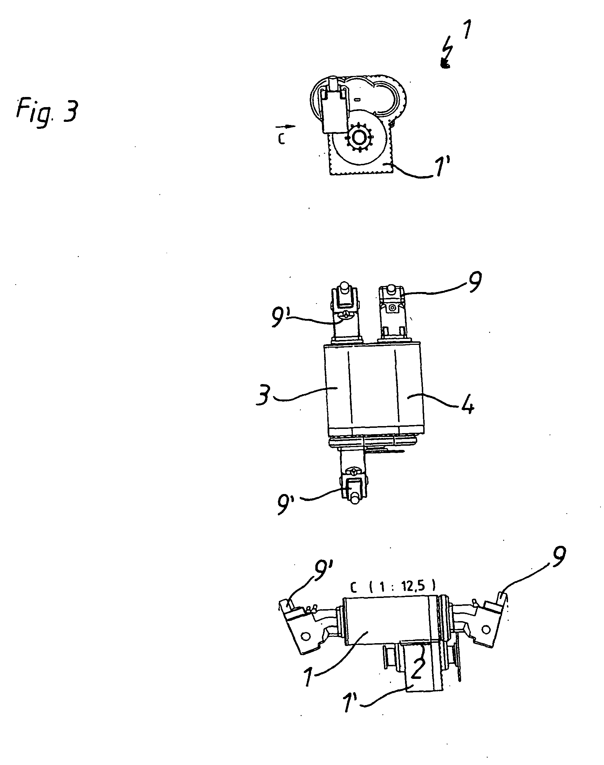

Das in Figur 3 dargestellte Lastschaltgetriebe könnte für ein Mobilfahrzeug, beispielsweise einen Radlader mit einem Dienstgewicht von 25 t, eingesetzt werden, wobei hier ein etwas andersartig ausgeführter Grundkörper 1 zum Einsatz gelangt, der mit einem Abtrieb 1' in Wirkverbindung steht. Auch hier sind zwei Kammern 3,4 vorgesehen, die beide mit sämtlichen Bauteilen eines Lastschaltgetriebes in Wirkverbindung stehen. Zum Einsatz kommen Hydromotore 9' mit einer Nenngröße von 110 cm³ sowie ein Hydromotor 9 mit einer Nenngröße von 80 cm³.

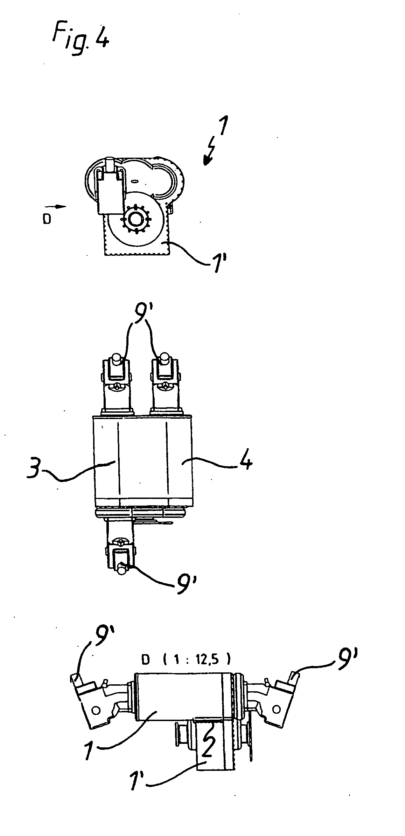

Figur 4 zeigt als Prinzipskizze ein Baukastensystem zur Herstellung eines Lastschaltgetriebes, das für ein Mobilfahrzeug mit beispielsweise 30 t Dienstgewicht verwendet werden kann. Der Grundkörper 1 entspricht demjenigen der Figur 3. Auch hier sind beide Kammern 3,4 mit sämtlichen Bauteilen eines Lastschaltgetriebes ausgerüstet. Abweichend von Figur 3 kommen hier Hydromotore 9' mit einer Nenngröße von 110 cm³ zum Einsatz.

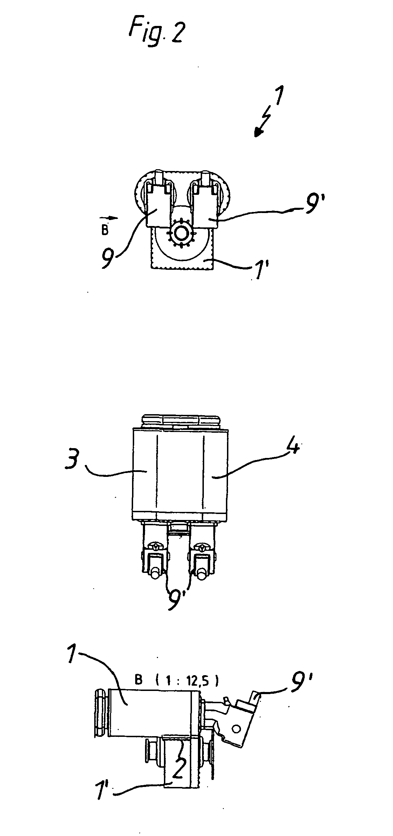

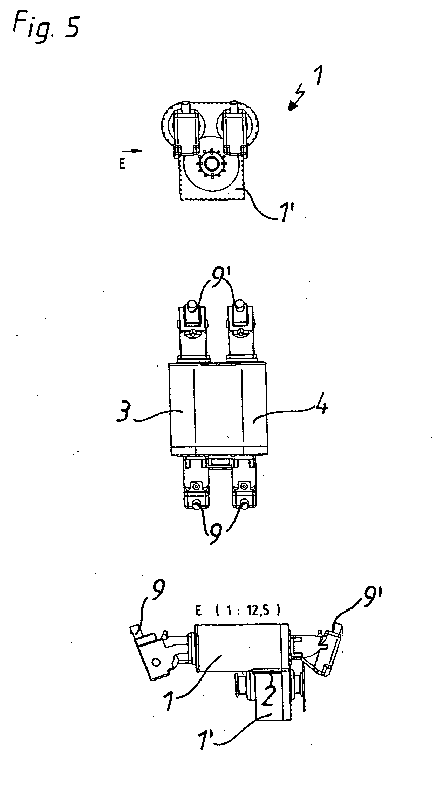

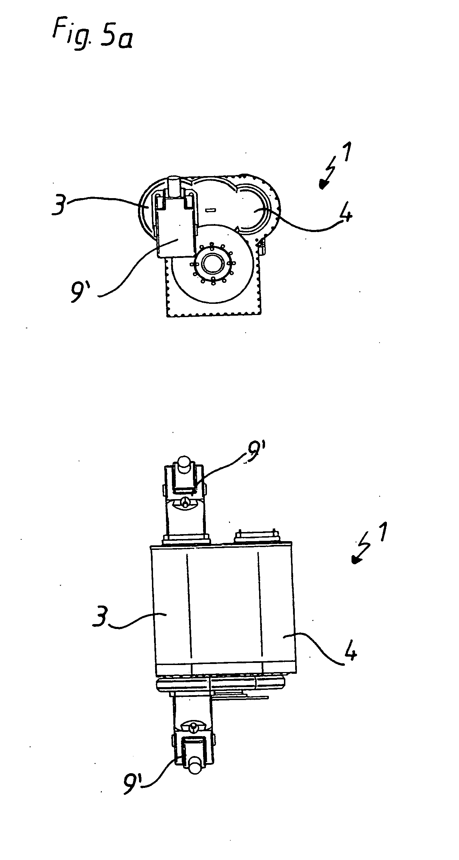

In Figur 5 ist ein Grundkörper 1 dargestellt, wie er den Figuren 1 und 2 entspricht. Die Kammern 3,4 sind in Analogie zu den Figuren 2 bis 4 mit sämtlichen Bauteilen eines Lastschaltgetriebes ausgerüstet. Zum Einsatz gelangen zwei Hydromotore 9 der Nenngröße 80 cm³ und zwei Hydromotore 9' der Nenngröße 110 cm³. Dieses Getriebe kann für Mobilfahrzeuge > 35 t eingesetzt werden. Denkbar sind beispielsweise in Steinbrüchen einsetzbare Radlader.

Figur 5 a zeigt ein alternatives nach Art eines Baukastensystems aufgebautes Lastschaltgetriebe. Analog zu Figur 1 sind auch hier zwei Kammern 3,4 vorgesehen. Die Kammer 3 ist mit den gleichen Bauteilen, wie in Figur 1 beschrieben, bestückt. Die Kammer 4 weist keine Antriebselemente auf, d. h. sie ist leer. Es sind zwei Hydromotore 9' vorhanden, die beidseitig der nicht dargestellten Antriebswelle der Kammer 3 am Grundkörper 1 angeflanscht sind.

Figur 6 zeigt als Prinzipskizze einen praktischen Einsatzfall eines derartigen, nach Art eines Baukastensystems aufgebauten hydrostatisch mechanischen Lastschaltgetriebes. Gleiche Bauteile werden mit gleichen Bezugszeichen versehen. Dargestellt ist in diesem Beispiel ein einstückiger aus Guss bestehende Grundkörper 1, der folgende Bauteile aufnimmt: eine Antriebswelle 5, eine einzelne Planetenradstufe 13, Kupplungen 14,14' sowie Bremsen 15, Abtriebselemente 7,16 sowie ein Pumpenverteilergetriebe 17. Die Bremsen 15 sind analog zu den Kupplungen 14,14' in Lamellenbauform ausgeführt, so dass sie ebenfalls als Kupplungen angesehen werden können. In dieser Querschnittsdarstellung ist lediglich die Antriebswelle 5 erkennbar, die innerhalb einer Kammer 3 vorgesehen ist. Das Pumpenverteilergetriebe 17 beinhaltet eine Eingangswelle 18. Auf dieser Eingangswelle 18 sind zwei als Zahnräder ausgebildet Übertragungselemente 19,20 vorgesehen. Das Übertragungselement 19 wirkt mit einem weiteren Übertragungselement 21 zusammen, während das Übertragungselement 20 mit einem weiteren Übertragungselement 22 kämmt. Die Übertragungselemente 19-22 sind als Zahnräder ausgebildet. Die Ausgangswellen 19',21',22'des Pumpenverteilergetriebes 17 wirken mit Hydropumpen 23,24,25 zusammen. Die Hydropumpe 23 kann beispielsweise eine Arbeitspumpe sein, während die Hydropumpen 24,25 mit den Hydromotoren 9 in geschlossenem Kreislauf zusammenwirken. Die Antriebsenergie wird durch einen Dieselmotor 26 zur Verfügung gestellt, der mit der Eingangswelle 18 in Wirkverbindung steht. Zur Herstellung eines Leistungsverzweigungsgetriebes kann das erfindungsgemäße Baukastensystem im Bereich des Pumpenverteilergetriebes 17 zur Erzeugung mehrerer Gänge - wie dargestellt - mit zwei Zahnradstufen 27,28 versehen werden, die auf ein gemeinsames Abtriebszahnrad 29 einwirken, das wiederum mit dem Abtriebselement 7 in Wirkverbindung steht. Denkbar ist jedoch auch nur eine einzelne Zahnradstufe, z. B. 27, oder aber mehr als zwei Zahnradstufen. Der Fachmann wird die Anzahl der notwendigen Zahnradstufen vom jeweiligen Anwendungsfall abhängig machen. Sowohl im Bereich des Übertragungselementes 20 als auch im Bereich der Zahnradstufen 27,28 sind weitere Kupplungen 30,31,32 vorgesehen, die unterschiedliche Schaltzustände des Leistungsverzweigungsgetriebes ermöglichen. Das Pumpenverteilergetriebe 17, in Wirkverbindung mit der mechanischen Überbrückung in Richtung des Abtriebselementes 7, ist somit als integraler Bestandteil des erfindungsgemäßen Baukastensystems anzusehen.

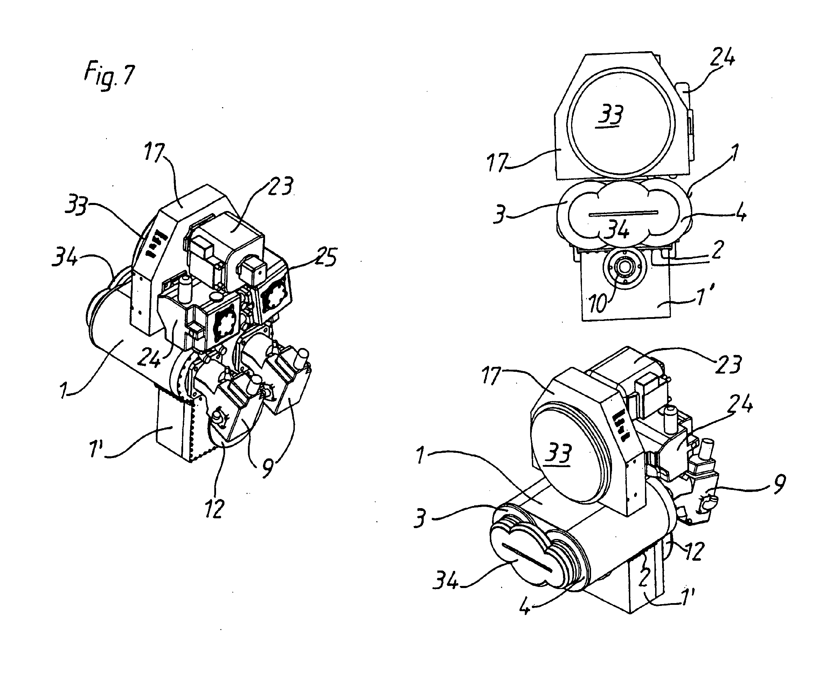

Figur 7 zeigt als Prinzipskizze ein in Modulbauweise erzeugtes Lastschaltgetriebe in verschiedenen Ansichten. Erkennbar sind folgende Bauteile: ein Grundkörper 1, beinhaltend zwei Kammern 3,4, ein Abtrieb 1', der über Schrauben 2 mit dem Grundkörper 1 verbunden ist, ein Pumpenverteilergetriebe 17, eine Bremsscheibe 12, eine Ausgangswelle 10, Hydromotore 9, die Arbeitspumpe 23 sowie weitere Hydropumpen 24,25 zur Versorgung der Hydromotore 9. Das weitere Innenleben des Lastschaltgetriebes ist hier nicht dargestellt. Verwiesen wird auf Figur 6. In dieser Ausgestaltungsform sind der Grundkörper 1 und das Pumpenverteilergetriebe 17 durch separate Gehäuse gebildet. An der Seite, wo keine Motoren oder Pumpen vorhanden sind, befinden sich Abschlussdeckel 33,34.

### Bezugszeichenliste

- 1: Grundkörper
- 1': Abtrieb
- 2: Schrauben
- 3: Kammer
- 4: Kammer
- 5: Antriebswelle
- 6: Antriebswelle
- 7: Abtriebselement
- 8: Abtriebselement
- 9: Hydromotor
- 9': Hydromotor
- 10: Ausgangswelle
- 11: Ausgangswelle
- 12: Bremsscheibe
- 13: Planetenradstufe
- 14: Kupplung
- 14': Kupplung
- 15: Bremse
- 16: Abtriebselement
- 17: Pumpenverteilergetriebe
- 18: Eingangswelle
- 19: Übertragungselement
- 19': Ausgangswelle
- 20: Übertragungselement
- 21: Übertragungselement
- 21': Ausgangswelle
- 22: Übertragungselement
- 22': Ausgangswelle
- 23: Hydropumpe
- 24: Hydropumpe
- 25: Hydropumpe
- 26: Dieselmotor
- 27: Zahnradstufe
- 28: Zahnradstufe
- 29: Abtriebszahnrad
- 30: Kupplung
- 31: Kupplung
- 32: Kupplung
- 33: Abschlussdeckel
- 34: Abschlussdeckel

## Patentansprüche

1. Baukastensystem für ein hydrostatisch mechanisches Lastschaltgetriebe, insbesondere für Mobilfahrzeuge mit unterschiedlichen Dienstgewichten, zumindest beinhaltend einen, mindestens zwei Kammern (3,4) aufweisenden Grundkörper (1,1'), wobei zumindest eine der Kammern (3) stets mit sämtlichen Bauteilen des Lastschaltgetriebes, wie insbesondere einer Antriebswelle (5), Bauteilen eines Planetengetriebes (13), Abtriebselementen (7) oder dergleichen, ausgerüstet ist, **dadurch gekennzeichnet, dass** mindestens eine weitere Kammer (4), wahlweise entweder mit im Wesentlichen den gleichen Bauteilen, die in der ersten Kammer (3) vorgesehen sind, bestückt ist oder die Kammer (4) leer bleibt oder die Kammer (4) lediglich mit einer mindesten ein Abtriebselement (8) aufweisenden Antriebswelle (6) bestückt ist, wobei außerhalb des Grundkörpers (1,1') in Abhängigkeit des jeweiligen Dienstgewichtes des Mobilfahrzeuges Hydromotore (9,9') gleicher oder unterschiedlicher Nenngröße im Bereich der jeweiligen Antriebswelle (5,6) ankuppelbar sind.

2. Baukastensystem nach Anspruch 1, **dadurch gekennzeichnet, dass** die erste Kammer (3) mit sämtlichen Bauteilen des Lastschaltgetriebes ausgerüstet ist, eine weitere Kammer (4) eine Antriebswelle (6) und Abtriebselemente (8) beinhaltet, und dass die Antriebswellen (5,6) beider Kammern (3,4) mit jeweils einem Hydromotor (9) vorgebbarer Nenngröße, insbesondere der Nenngröße 80 cm³, versehen sind.

3. Baukastensystem nach Anspruch 1, **dadurch gekennzeichnet, dass** zwei Kammern (3,4) mit sämtlichen Bauteilen des Lastschaltgetriebes ausgerüstet sind, wobei die Bauteile baugleich ausgebildet sind, und dass die Antriebswellen (5,6) beider Kammern (3,4) mit jeweils einem Hydromotor (9') vorgebbarer Nenngröße, insbesondere der Nenngröße 110 cm³, versehen sind.

4. Baukastensystem nach Anspruch 1, **dadurch gekennzeichnet, dass** zwei Kammern (3,4) mit sämtlichen Bauteilen des Lastschaltgetriebes ausgerüstet sind, wobei die Bauteile baugleich ausgebildet sind, und dass mindestens drei Hydromotore (9,9') gleicher oder unterschiedlicher Nenngröße mit den Antriebswellen (5,6) in Wirkverbindung stehen.

5. Baukastensystem nach Anspruch 1, **dadurch gekennzeichnet, dass** zwei Kammern (3,4) mit sämtlichen Bauteilen des Lastschaltgetriebes ausgerüstet sind, wobei die Bauteile baugleich ausgebildet sind, und dass mindestens vier Hydromotore (9,9') gleicher oder unterschiedlicher Nenngröße mit den Antriebswellen (5,6) in Wirkverbindung stehen.

6. Baukastensystem nach einem der Ansprüche 1 bis 5, d**adurch gekennzeichnet, dass** die Kammern (3,4), im Wesentlichen parallel zueinander verlaufend, innerhalb des Grundkörpers (1) angeordnet sind.

7. Baukastensystem nach einem der Ansprüche 1 bis 6, **dadurch gekennzeichnet, dass** über definierte Bereiche des Dienstgewichtes des Mobilfahrzeuges gleiche Baugrößen des Grundkörpers (1,1') Anwendung finden.

8. Baukastensystem nach einem der Ansprüche 1 bis 7, **dadurch gekennzeichnet, dass** die Hydromotore (9,9') in ein- oder beidseitiger Anordnung im Bereich der jeweiligen Antriebswelle (5,6) am Grundkörper (1) vorgesehen sind.

9. Baukastensystem nach einem der Ansprüche 1 bis 8, **dadurch gekennzeichnet, dass** der Grundkörper (1,1') mit einem Pumpenverteilergetriebe (17) in Wirkverbindung steht.

10. Baukastensystem nach einem der Ansprüche 1 bis 9, **dadurch gekennzeichnet, dass** das Pumpenverteilergetriebe (17) lösbar mit dem Grundkörper verbunden ist.

11. Baukastensystem nach einem der Ansprüche 1 bis 10, **dadurch gekennzeichnet, dass** die Elemente des Pumpenverteilergetriebes (17) innerhalb des Grundkörpers (1,1') integriert sind.

12. Baukastensystem nach einem der Ansprüche 1 bis 11, **dadurch gekennzeichnet, dass** innerhalb des Pumpenverteilergetriebes (17), respektive des Grundkörpers (1,1'), Übertragungselemente (19,20,21,22) und Zahnradstufen (27,28), Abtriebselemente (29) und Kupplungen (30,31,32) vorgesehen sind, die, eine mechanische Überbrückung eines hydrostatischen Kreislaufes bildend, mit den Abtriebselementen (7,8) des Lastschaltgetriebes in Wirkverbindung stehen.

## Claims

1. A modular system for a hydrostatic mechanical power shift gear, in particular for mobile vehicles having different weights, at least comprising one base body (1, 1') having two chambers (3, 4), wherein at least one of the chambers (3) is constantly provided with all components of the power shift gear, such as in particular a drive shaft (5), components of a planet gear (13), driven elements (7) or the like, **characterized in that** at least one other chamber (4) is optionally either provided with the same components which are provided in the first chamber (3) or the chamber (4) remains empty or the chamber (4) is only provided with one drive shaft (6) comprising at least one driven element (8), wherein hydraulic motors (9, 9') with the same or a different rated quantity can be coupled in the area of the respective drive shaft (5, 6) outside the base body (1, 1') in dependence on the respective weight of the mobile vehicle.

2. A modular system according to claim 1, **characterized in that** the first chamber (3) is equipped with all the components of the power shift gear, another chamber (4) comprises a drive shaft (6) and driven elements (8), and that the drive shafts (5, 6) of both chambers (3, 4) are respectively provided with a hydraulic motor (9) with a pre-determinable rated quantity, in particular with the rated quantity of 80 cm³_{.}

3. A modular system according to claim 1, **characterized in that** two chambers (3, 4) are equipped with all the components of the power shift gear, wherein the components are constructed in the same way, and that the drive shafts (5, 6) of both chambers (3, 4) are respectively provided with a hydraulic motor (9) with a pre-determinable rated quantity, in particular with the rated quantity of 110 cm³.

4. A modular system according to claim 1, **characterized in that** two chambers (3, 4) are equipped with all the components of the power shift gear, wherein the components are constructed in the same way, and that at least three hydraulic motors (9, 9') with the same or a different rated quantity are actively related to the drive shafts (5, 6).

5. A modular system according to claim 1, **characterized in that** two chambers (3, 4) are equipped with all the components of the power shift gear, wherein the components are constructed in the same way, and that at least four hydraulic motors (9, 9') with the same or a different rated quantity are actively related to the drive shafts (5, 6).

6. A modular system according to one of the claims 1 through 5, **characterized in that** the chambers (3, 4) are essentially placed in parallel with respect to each other inside the base body (1).

7. A modular system according to one of the claims 1 through 6, **characterized in that** for defined ranges of the weight of the mobile vehicle same sizes of the base body (1, 1') are used.

8. A modular system according to one of the claims 1 through 7, **characterized in that** the hydraulic motors (9, 9') are provided on one side or on both sides of the base body (1) in the area of the respective drive shaft (5, 6).

9. A modular system according to one of the claims 1 through 8, **characterized in that** the base body (1, 1') is actively related to a pump transfer case (17).

10. A modular system according to one of the claims 1 through 9, **characterized in that** the pump transfer case (17) is detachably connected to the base body.

11. A modular system according to one of the claims 1 through 10, **characterized in that** the elements of the pump transfer case (17) are integrated within the base body (1, 1').

12. A modular system according to one of the claims 1 through 11, **characterized in that** transfer elements (19, 20, 21, 22) and gearwheel stages (27, 28), driven elements (29) and clutches (30, 31, 32) are provided inside the pump transfer case (17) respectively the base body (1, 1'), which are actively related to the driven elements (7, 8) of the power shift gear while forming a mechanical bridge of a hydrostatic circuit.

## Revendications

1. Système modulaire pour boîte de vitesse et d'inversion hydrostatique-mécanique, notamment pour des véhicules mobiles ayant des poids différents, comprenant au moins un corps de base (1, 1') comprenant au moins deux chambres (3, 4), au moins l'une des chambres (3) étant constamment munie de toutes les pièces détachées de la boîte de vitesse et d'inversion, telles que notamment d'un arbre menant (5), des pièces d'un engrenage planétaire (13), des éléments récepteurs (7) ou similaire, **caractérisé en ce qu'**au moins une autre chambre (4) est facultativement soit équipée des pièces qui sont essentiellement les mêmes que celles prévues dans la première chambre (3) soit la chambre (4) reste vide soit la chambre (4) n'est équipée que d'un arbre menant comprenant au moins un élément récepteur (8), des moteurs hydrauliques (9, 9') ayant les mêmes grandeurs nominales ou des grandeurs nominales différentes étant susceptibles d'être accouplés au niveau d'arbre menant respectif (5, 6) à l'extérieur du corps de base en fonction du poids respectif du véhicule mobile.

2. Système modulaire selon la revendication 1, **caractérisé en ce que** la première chambre (3) est équipée de toutes les pièces détachées de la boîte de vitesse et d'inversion, une autre chambre (4) comprend un arbre menant (6) et des éléments récepteurs (8) et que les arbres menant (5, 6) des deux chambres sont respectivement munis d'un moteur hydraulique (9) ayant une grandeur nominale pré-déterminable, notamment une grandeur nominale de 80 cm³.

3. Système modulaire selon la revendication 1, **caractérisé en ce que** deux chambres (3, 4) sont équipées de toutes les pièces détachées de la boîte de vitesse et d'inversion, les pièces étant construites de la même manière, et que les arbres menant (5, 6) des deux chambres (3, 4) sont respectivement munis d'un moteur hydraulique (9') ayant une grandeur nominale pré-déterminable, notamment une grandeur nominale de 110 cm³.

4. Système modulaire selon la revendication 1, **caractérisé en ce que** deux chambres (3, 4) sont équipées de toutes les pièces détachées de la boîte de vitesse et d'inversion, les pièces étant construites de la même manière, et qu'au moins trois moteurs hydrauliques (9, 9') ayant les mêmes grandeurs nominales ou des grandeurs nominales différentes sont activement reliés aux arbres menant (5, 6).

5. Système modulaire selon la revendication 1, **caractérisé en ce que** deux chambres (3, 4) sont équipées de toutes les pièces détachées de la boîte de vitesse et d'inversion, les pièces étant construites de la même manière, et qu'au moins quatre moteurs hydrauliques (9, 9') ayant les mêmes grandeurs nominales ou des grandeurs nominales différentes sont activement reliés aux arbres menant (5, 6).

6. Système modulaire selon l'une des revendications 1 à 5, **caractérisé en ce que** les chambres (3, 4) sont essentiellement disposées en parallèle l'une par rapport à l'autre à l'intérieur du corps de base (1).

7. Système modulaire selon l'une des revendications 1 à 6, **caractérisé en ce qu'**on utilise les mêmes tailles du corps de base (1, 1') pour des régimes définis du poids du véhicule mobile.

8. Système modulaire selon l'une des revendications 1 à 7, **caractérisé en ce que** les moteurs hydrauliques (9, 9') sont prévus d'un côté ou des deux côtés du corps de base (1) au niveau de l'arbre menant respectif (5, 6).

9. Système modulaire selon l'une des revendications 1 à 8, **caractérisé en ce que** le corps de base (1, 1') est activement relié à un engrenage distributeur à pompes (17).

10. Système modulaire selon l'une des revendications 1 à 9, **caractérisé en ce que** l'engrenage distributeur à pompes (17) est relié de manière amovible au corps de base.

11. Système modulaire selon l'une des revendications 1 à 10, **caractérisé en ce que** les éléments de l'engrenage distributeur à pompes (17) sont intégrés à l'intérieur du corps de base (1, 1').

12. Système modulaire selon l'une des revendications 1 à 11, **caractérisé en ce que** des éléments de transfert (19, 20, 21, 22) et des étages de roues dentées (27, 28), des éléments récepteurs (29) et des embrayages (30, 31, 32) sont prévus à l'intérieur de l'engrenage distributeur à pompes (17) ou du corps de base (1, 1'), lesquels sont activement reliés aux éléments récepteurs (7, 8) de la boîte de vitesse et d'inversion en formant un pontage mécanique d'un circuit hydrostatique.
